# FASCICULE DE BREVET EUROPEEN

(11) **EP 3 387 061 B1**
(45) Date de publication et mention de la délivrance du brevet: **27.12.2023**
(21) Numéro de dépôt: 16733381.4
(22) Date de dépôt: 22.06.2016
(51) Int. Cl.: C08K 3/015, C08K 7/02, C08K 3/00, C08K 3/22, C08K 3/38, C08K 5/00, C08L 21/00, A44C 27/00, G04B 37/18, G04B 37/22

(54) **MATIERE ÉLASTOMÉRIQUE CONFORTABLE**
BEQUEMES ELASTOMERMATERIAL
COMFORTABLE ELASTOMERIC MATERIAL

(30) Priorité: 11.12.2015 EP 15199632
(43) Date de publication de la demande: 17.10.2018
(73) Titulaire: Omega SA, 2502 Biel/Bienne (CH)
(72) Inventeur: FRANÇOIS, Nicolas, 2000 Neuchâtel (CH)
(74) Mandataire: ICB SA
(86) Numéro de dépôt international: PCT/EP2016/064439
(87) Numéro de publication internationale: WO 2017/097439

(56) Documents cités:
- EP-A1- 2 468 127
- EP-A1- 2 620 295
- US-A1- 2009 175 135
- DATABASE WPI Week 201067 Thomson Scientific, London, GB; AN 2010-L94829 XP002761037, & CN 201 563 751 U (LI M) 1 septembre 2010 (2010-09-01)

## Description

### Domaine de l'invention

La présente invention concerne le domaine technique des matériaux à base d'élastomères. Plus précisément, l'invention concerne une matière élastomère pour la réalisation de pièces d'horlogerie, ainsi qu'un procédé de fabrication de pièces, ainsi que les pièces obtenues.

### Arrière-plan de l'invention

De nombreux matériaux élastomères existent sur le marché et sont connus pour leur utilisation en tant que bracelet par exemple pour leur qualité de confort, de touché souple et leur résistance.

Ainsi, il est connu du document JP 2000204265 de réaliser une matière élastomère thermoplastique comportant des propriétés antibactériennes et présentant une bonne résistance au vieillissement.

Il est également connu du document EP 2 468 127 une pièce de bijouterie, au moins partiellement réalisée en un matériau composite comprenant une matrice élastomère dans laquelle sont dispersées des charges de renfort choisies parmi le groupe comprenant des microfibres, des nanoparticules de polytétrafluoroéthylène, et leurs mélanges, ledit matériau composite étant obtenu à partir d'une composition comprenant entre 60% et 95% en poids d'au moins un élastomère, entre 0% et 5% en poids de microfibres et entre 0% et 40% en poids de nanoparticules de polytétrafluoroéthylène, par rapport au poids total de la composition, au moins l'une desdites charges de renfort étant présente. CN 201 563 751 U1 décrit des bracelets de montre qui absorbent la transpiration.

Cependant, les matières élastomères utilisées pour les bracelets ou les composants d'horlogerie en contact avec la peau ne permettent pas d'obtenir une bonne évacuation de la transpiration, les propriétés antibactériennes permettant seulement de neutraliser les mauvaises odeurs. De plus, les bracelets sont souvent soumis à des frottements ou de l'abrasion ce qui tend à enlever une certaine quantité de l'agent antibactérien et donc à diminuer l'efficacité de ce dernier.

### Résumé de l'invention

L'invention a notamment pour objectif de pallier aux différents inconvénients de ces techniques connues.

Plus précisément, un objectif de l'invention est de fournir un matériau adapté à la réalisation de pièces en matière élastomère destinées à être en contact prolongé avec la peau (direct ou indirect), et obtenir un élastomère avec des propriétés permettant d'améliorer le confort, tout en conservant une bonne colorabilité et une bonne résistance au vieillissement (UV, transpiration, esthétique).

Ces objectifs, ainsi que d'autres qui apparaîtront plus clairement par la suite, sont atteints selon l'invention à l'aide d'une matière élastomère pour bracelets ou composants d'horlogerie destinés à être en contact avec la peau, la matière élastomère comprenant des moyens d'évacuation de l'humidité. Selon l'invention, les moyens d'évacuation comprennent des microfibres hydrophiles, lesdites fibres formant des canaux dans la matière élastomère de manière à transporter l'humidité par capillarité à travers ladite matière, et caractérisée en ce que la matière élastomère comprend des charges conductrices thermiquement choisies parmi l'oxyde de zinc ou le nitrure de bore et un additif antimicrobien de type composé organique de zinc ou sels d'argent ou sels d'aluminium.

Conformément à d'autres variantes avantageuses de l'invention :
- la matière élastomère est choisie parmi des élastomères thermoplastiques tels que le polyuréthane, le polyéther block amide, les copolyesters élastomères, les élastomères acryliques ou les élastomères styréniques ;
- la matière élastomère est choisie parmi des élastomères vulcanisables à chaud tels que les fluoroélastomères, les copolymères butadiène acrylonitrile, les silicones, ou l'éthylène propylène diène monomère ;
- la matière élastomère est choisie parmi des élastomères vulcanisables à froid tels que les silicones ;
- les microfibres hydrophiles présentent une finesse inférieure à 150 mTex ;
- les microfibres hydrophiles sont réalisées en une matière synthétique de la famille des polyamides, ou des polyesters ;
- les microfibres hydrophiles sont réalisées en une matière cellulosique comme le coton ou le lin ou bien des dérivés artificiels comme la viscose ;
- les microfibres hydrophiles présentent une section transversale à n canaux, avec n >2 ;
- la section des microfibres hydrophiles présente une forme oblongue avec des rainures ou une forme d'hélice.

L'invention concerne aussi et notamment toute pièce d'horlogerie réalisée en matière élastomère conformément à l'invention.

L'invention concerne également un procédé de fabrication d'un bracelet comprenant au moins une partie à base d'une matière élastomère, la matière élastomère comprenant au moins des microfibres hydrophiles, des charges conductrices thermiquement et un additif antimicrobien.

Le procédé de fabrication comprend les étapes suivantes :
- réaliser un mélange à partir de la matière élastomère ;
- ajouter au mélange obtenu à la première étape au moins des microfibres hydrophiles, des charges conductrices thermiquement et un additif antimicrobien ;
- réaliser le bracelet à partir du mélange obtenu à la deuxième étape au moyen d'un moulage.

Selon ce procédé, la matière élastomère est choisie parmi les élastomères thermoplastiques et les élastomères vulcanisables à chaud ou à froid.

L'invention concerne encore un procédé d'assemblage d'un bracelet obtenu au moyen du précédé de fabrication conforme à l'invention, comprenant les étapes suivantes :
- réaliser un une première couche d'un bracelet destinée à être en contact contre la peau ;
- assembler une couche esthétique sur le dessus de la première couche, la couche esthétique pouvant être du cuir, du tissu, du polymère ou tout autre élément décoratif.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :

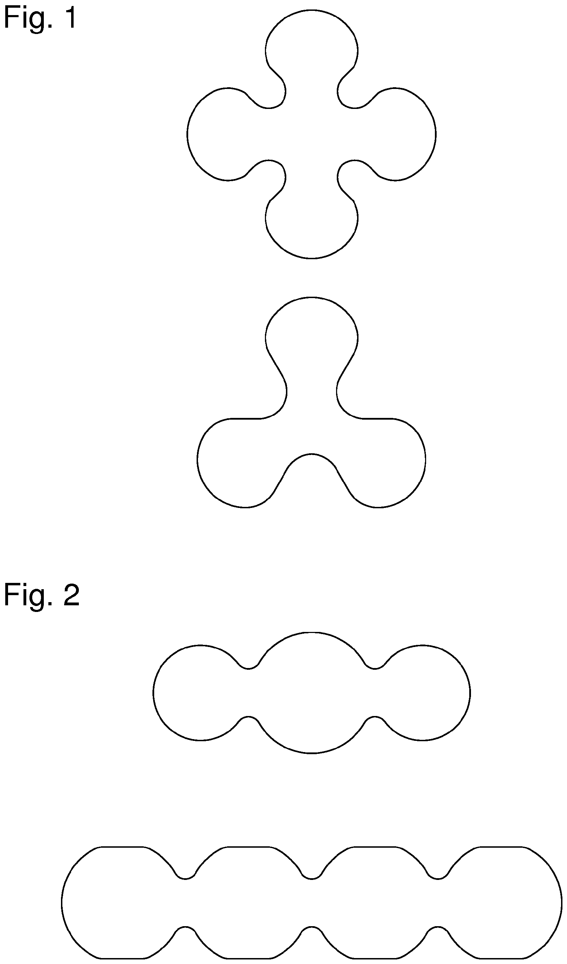

- les figures 1 et 2 illustrent une vue en coupe de fibres hydrophiles présentes dans la matière élastomère conforme à l'invention.

### Description détaillée des modes de réalisation préférés

L'invention concerne une matière élastomère pour bracelet ou composants d'horlogerie destinés à être en contact avec la peau, la matière élastomère comprenant des moyens d'évacuation de l'humidité, caractérisé en ce que les moyens d'évacuation comprennent des microfibres hydrophiles aptes à évacuer et neutraliser l'humidité au travers de la matière.

Selon un mode de réalisation préférentiel de l'invention, la matière élastomère comprend des charges conductrices thermiquement présentant une conductivité thermique supérieure à 20W.m-1.K-1, telles qu'un oxyde de zinc ou encore une nitrure de bore hexagonal. Ces charges conductrices thermiquement peuvent être présentes à hauteur de 40% en masse et permettent d'accroître la conductivité thermique de la matière jusqu'à 12W.m-1.K-1 sans pour autant accroitre la conductivité électrique de celle-ci. De telles charges conductrices thermiquement ont pour avantage de mieux évacuer la chaleur corporelle et donc de limiter la transpiration.

Selon un aspect avantageux de l'invention, la matière élastomère peut comprendre un additif antimicrobien de type composé organique de zinc ou sels d'argent ou d'aluminium de manière à limiter, voire d'empêcher, le développement de mauvaises odeurs, à la surface et à l'intérieur de la matière, dues essentiellement à la transpiration du porteur lorsque le bracelet est au contact de la peau par exemple.

Selon les besoins, l'agent antibactérien peut être combiné au mélange d'élastomère et de charges conductrices à hauteur de 2% à 6% en masse.

La matière élastomère pour le bracelet ou les composants d'horlogerie peut être choisie parmi un ou plusieurs élastomères thermoplastiques tels que le polyuréthane, le polyéther block amide, les copolyesters élastomères, les élastomères acryliques ou les élastomères styréniques.

Selon un autre mode de réalisation de l'invention, la matière est choisie parmi des élastomères vulcanisables à chaud tels que les fluoroélastomères, les copolymères butadiène acrylonitrile, les silicones, ou l'éthylène propylène diène monomère.

Encore selon un autre mode de réalisation de l'invention, la matière est choisie parmi des élastomères vulcanisables à froid tels que les silicones.

La dureté de la matière élastomère peut être choisie sur une gamme de 20 shore 00 à 90 shore D suivant le besoin haptique et fonctionnel.

Il est possible de réaliser par moulage des éléments durs d'une boîte avec des duretés de 90 shore D par exemple, alors que les matières shore 00 et shore A seront plutôt utilisées en revêtement sur un élément dur. Les pièces souples telles que les bracelets seront réalisées à partir d'une dureté shore A.

Par exemple, dans le cas d'une boîte de montre, l'élastomère peut être pulvérisé à la surface de la boite et servir de revêtement, ou bien surmoulé pour apporter un toucher doux.

Selon l'invention, le mélange d'élastomère, de charges conductrices et d'agent antibactérien est repris et mélangé à des microfibres hydrophiles prétraitées pour une meilleure affinité avec le mélange. Selon les besoins, les microfibres hydrophiles sont présentes entre 8% et 25% en masse de manière à atteindre le seuil de percolation.

Pour rappel, il y a percolation lorsque l'agent qui se déplace dans les porosités de la structure est capable de traverser cette dernière de part en part. Dans le cas présent, la structure est représentée par la matière élastomère, les porosités sont représentées par les microfibres hydrophiles, et l'agent se déplaçant au travers de la matière est la transpiration.

Au seuil de percolation dans le mélange, les microfibres se touchent et forment des canaux améliorant jusqu'à mille fois le pouvoir de diffusion de la matrice formée par la matière élastomère et l'humidité peut être transportée par capillarité à travers la matière et ainsi être évacuée.

Conformément à la présente invention, les microfibres hydrophiles présentent une finesse inférieure à 150 mTex, ce qui est une taille suffisante pour pouvoir transporter les molécules type H₂O.

De manière avantageuse, les microfibres hydrophiles peuvent être réalisées en une matière synthétique de la famille des polyamides ou des polyesters car elles transportent rapidement l'humidité grâce à leurs fonctions hydrophiles et sèchent également très rapidement.

Selon un autre mode de réalisation de l'invention, les fibres hydrophiles peuvent être réalisées en une matière cellulosique comme le coton ou le lin ou bien des dérivés artificiels comme la viscose qui conviennent également pour évacuer l'humidité.

Selon l'invention, les microfibres ont préférentiellement une section transversale en forme d'hélice pour leur donner une surface spécifique plus importante et donc un pouvoir de diffusion plus rapide.

Plus précisément, et comme illustré aux figures 1 et 2, la section des fibres hydrophiles est en forme d'hélice à n pales avec n strictement supérieur à deux, de manière à offrir une plus grande surface spécifique et ainsi favoriser l'évacuation de l'humidité.

L'invention concerne également au moins un brin de bracelet en matière élastomère conforme à l'invention.

Le mélange décrit précédemment peut être directement moulé pour réaliser des brins de bracelets mono-matière en élastomère confortable, ou encore surmoulé pour réaliser des brins de bracelets bi-matières confortables, chaque brin présentant une première partie inférieure en matière confortable en contact avec la peau, et une partie supérieure dans une autre matière avantageuse pour sa fonction. On peut également imaginer que chacune des parties présente une couleur différente dans un but purement esthétique.

L'invention concerne également un procédé de fabrication d'un bracelet comprenant au moins une partie à base d'une matière élastomère, la matière élastomère comprenant au moins des microfibres hydrophiles, des charges conductrices thermiquement et un additif antimicrobien.

Selon l'invention, le procédé de fabrication comprend les étapes suivantes :
- réaliser un mélange à partir de la matière élastomère ;
- ajouter au mélange obtenu à la première étape au moins des microfibres hydrophiles, des charges conductrices thermiquement et un additif antimicrobien ;
- réaliser le bracelet à partir du mélange obtenu à la deuxième étape au moyen d'un moulage.

Selon les besoins de l'homme du métier et des pièces à réaliser, la matière élastomère peut être choisie parmi les élastomères thermoplastiques, les élastomères vulcanisables à chaud ou à froid, voire un mélange de ces matières.

L'invention concerne aussi un procédé d'assemblage d'un bracelet obtenu au moyen du précédé de fabrication conforme à l'invention, et comprenant les étapes suivantes :
- réaliser un une première couche d'un bracelet en matière élastomère conforme à l'invention et destinée à être en contact contre la peau de manière à pouvoir évacuer la transpiration ;
- assembler une couche esthétique sur le dessus de la première couche, la couche esthétique pouvant être du cuir, du tissu, du polymère ou tout autre élément décoratif.

Une telle matière avantageuse pour améliorer le confort permet de fabriquer des pièces d'horlogerie ou des bijoux comme des bracelets, des boucles de bracelets, des colliers, des boîtes, des fonds de boîte, des poussoirs, des boucles ou encore des lunettes. On note également que la matière peut se révéler très intéressante pour la fabrication de montures de lunettes, et en particulier les branches, le pont et les plaquettes.

Bien entendu, la présente invention ne se limite pas à l'exemple illustré et est susceptible de diverses variantes et modifications qui apparaîtront à l'homme de l'art.

## Revendications

1. Matière élastomère pour bracelets ou composants d'horlogerie destinés à être en contact avec la peau, la matière élastomère comprenant des moyens d'évacuation de l'humidité, **caractérisée en ce que** les moyens d'évacuation comprennent des microfibres hydrophiles, lesdites fibres formant des canaux dans la matière élastomère de manière à transporter l'humidité par capillarité à travers ladite matière, et **caractérisée en ce que** la matière élastomère comprend des charges conductrices thermiquement choisies parmi l'oxyde de zinc ou le nitrure de bore et un additif antimicrobien de type composé organique de zinc ou sels d'argent ou de sels d'aluminium.

2. Matière élastomère selon la revendication 1, dans laquelle la matière est choisie parmi des élastomères thermoplastiques tels que le polyuréthane, le polyéther block amide, les copolyesters élastomères, les élastomères acryliques ou les élastomères styréniques.

3. Matière élastomère l'une quelconques des revendications 1 à 2, dans laquelle la matière est choisie parmi des élastomères vulcanisables à chaud tels que les fluoroélastomères, les copolymères butadiène acrylonitrile, les silicones, ou l'éthylène propylène diène monomère.

4. Matière élastomère l'une quelconques des revendications 1 à 3, dans laquelle la matière est choisie parmi des élastomères vulcanisables à froid tels que les silicones.

5. Matière élastomère selon l'une quelconques des revendications 1 à 4, dans laquelle les microfibres hydrophiles présentent une finesse inférieure à 150 mTex.

6. Matière élastomère selon l'une quelconque des revendications 1 à 5, dans laquelle les microfibres hydrophiles sont réalisées en une matière synthétique de la famille des polyamides ou des polyesters.

7. Matière élastomère selon l'une quelconque des revendications 1 à 6 dans laquelle les microfibres hydrophiles sont réalisées en une matière cellulosique comme le coton ou le lin ou bien à base de dérivés artificiels comme la viscose.

8. Matière élastomère selon l'une quelconque des revendications 1 à 7, dans laquelle les microfibres hydrophiles présentent une section transversale à n canaux, avec n >2.

9. Matière élastomère selon la revendication 8, dans laquelle la section des microfibres hydrophiles présente une forme oblongue avec des rainures ou une forme d'hélice.

10. Procédé de fabrication d'un bracelet en matière élastomère, comprenant au moins une partie à base d'une matière élastomère, la matière élastomère comprenant au moins des microfibres hydrophiles, des charges conductrices thermiquement et un additif antimicrobien, **caractérisé en ce qu'**il comprend les étapes suivantes :
- réaliser un mélange à partir de la matière élastomère ;
- ajouter au mélange obtenu à la première étape au moins des microfibres hydrophiles, des charges conductrices thermiquement et un additif antimicrobien ;
- réaliser le bracelet à partir du mélange obtenu à la deuxième étape au moyen d'un moulage.

11. Procédé selon la revendication 10, **caractérisé en ce que** la matière élastomère est choisie parmi les élastomères thermoplastiques et les élastomères vulcanisables.

12. Procédé d'assemblage d'un bracelet obtenu au moyen du précédé selon les revendications 10 et 11, **caractérisé en ce qu'**il comprend les étapes suivantes :
- réaliser un une première couche d'un bracelet destinée à être en contact contre la peau ;
- assembler une couche esthétique sur le dessus de la première couche.

13. Procédé d'assemblage selon la revendication 14, dans lequel la couche esthétique est du cuir, du tissu, du polymère ou tout autre élément décoratif.

## Patentansprüche

1. Elastomer-Materie für Armbänder oder Uhrmachereikomponenten, die dazu bestimmt sind, mit der Haut in Kontakt zu sein, wobei die Elastomer-Materie Mittel zum Abführen von Feuchtigkeit umfasst, **dadurch gekennzeichnet, dass** die Mittel zum Abführen wasseranziehende Mikrofasern umfassen, wobei die Fasern Kanäle in der Elastomer-Materie bilden, um die Feuchtigkeit durch Kapillarwirkung durch die Materie hindurch zu transportieren, und **dadurch gekennzeichnet, dass** die Elastomer-Materie thermisch leitfähige Füllstoffe, die aus Zinkoxid oder Bornitrid ausgewählt sind, und einen antimikrobiellen Zusatzstoff in der Art einer organischen Zinkverbindung oder Silbersalze oder Aluminiumsalze umfasst.

2. Elastomer-Materie nach Anspruch 1, wobei die Materie aus thermoplastischen Elastomeren wie Polyurethan, Polyetherblockamid, Elastomer-Copolyestern, Acryl-Elastomeren oder Styrol-Elastomeren ausgewählt ist.

3. Elastomer-Materie nach einem der Ansprüche 1 bis 2, wobei die Materie aus heißvulkanisierbaren Elastomeren, wie Fluorelastomeren, Butadien-Acrylnitril-Copolymeren, Silikonen oder Ethylen-Propylen-Dien-Monomer ausgewählt ist.

4. Elastomer-Materie nach einem der Ansprüche 1 bis 3, wobei die Materie aus kaltvulkanisierbaren Elastomeren wie Silikonen ausgewählt ist.

5. Elastomer-Materie nach einem der Ansprüche 1 bis 4, wobei die wasseranziehenden Mikrofasern eine Feinheit von weniger als 150 mTex aufweisen.

6. Elastomer-Materie nach einem der Ansprüche 1 bis 5, wobei die wasseranziehenden Mikrofasern aus einer synthetischen Materie aus der Familie der Polyamide oder der Polyester hergestellt sind.

7. Elastomer-Materie nach einem der Ansprüche 1 bis 6, wobei die wasseranziehenden Mikrofasern aus einer Zellulosematerie, wie Baumwolle oder Leinen oder aber auf der Basis künstlicher Derivate wie Viskose hergestellt sind.

8. Elastomer-Materie nach einem der Ansprüche 1 bis 7, wobei die wasseranziehenden Mikrofasern einen Querschnitt mit n Kanälen aufweisen, wobei n > 2 ist.

9. Elastomer-Materie nach Anspruch 8, wobei der Schnitt der wasseranziehenden Mikrofasern eine längliche Form mit Rillen oder eine Schraubenform aufweist.

10. Verfahren zur Herstellung eines Armbands aus Elastomer-Materie, welches mindestens einen Teil auf der Basis einer Elastomer-Materie umfasst, wobei die Elastomer-Materie mindestens wasseranziehende Mikrofasern, thermisch leitfähige Füllstoffe und einen antimikrobiellen Zusatzstoff umfasst, **dadurch gekennzeichnet, dass** es die folgenden Schritte umfasst:
- Herstellen eines Gemisches aus der Elastomer-Materie;
- Zugeben von mindestens wasseranziehenden Mikrofasern, thermisch leitfähigen Füllstoffen und einem antimikrobiellen Zusatzstoff zu dem im ersten Schritt erhaltenen Gemisch;
- Herstellen des Armbands aus dem im zweiten Schritt erhaltenen Gemisch anhand von Formen.

11. Verfahren nach Anspruch 10, **dadurch gekennzeichnet, dass** die Elastomer-Materie aus thermoplastischen Elastomeren und vulkanisierbaren Elastomeren ausgewählt ist.

12. Verfahren zum Zusammensetzen eines Armbands, das anhand des Verfahrens nach den Ansprüchen 10 und 11 erhalten wird, **dadurch gekennzeichnet, dass** es die folgenden Schritte umfasst:
- Herstellen einer ersten Schicht eines Armbands, das dazu bestimmt ist, mit der Haut in Kontakt zu sein;
- Zusammensetzen einer ästhetischen Schicht auf der Oberseite der ersten Schicht.

13. Verfahren zum Zusammensetzen nach Anspruch 14, wobei die ästhetische Schicht Leder, Stoff, Polymer oder jedes andere dekorative Element ist.

## Claims

1. Elastomer material for wristbands or components for horology intended to be in contact with the skin, the elastomer material including moisture wicking means, **characterised in that** said the wicking means include hydrophilic microfibres, said fibres forming channels in the elastomer material to transport moisture by capillary action through said material, and **characterised in that** the elastomer material comprises thermally conductive fillers selected from zinc oxide and boron nitride and an antimicrobial additive of the organic zinc compound or silver salts or aluminium salts type.

2. Elastomer material according to claim 1, wherein the material is chosen from thermoplastic elastomers such as polyurethane, polyether block amine, copolyester elastomers, acrylic elastomers or styrene elastomers.

3. Elastomer material according to any of claims 1 to 2, wherein the material is chosen from hot vulcanisable elastomers such as fluoroelastomers, acrylonitrile butadiene copolymers, silicones, or ethylene propylene diene monomer.

4. Elastomer material according to any of claims 1 to 3, wherein the material is chosen from cold vulcanisable elastomers such as silicones.

5. Elastomer material according to any of claims 1 to 4, wherein the hydrophilic microfibres have a fineness of less than 150 mTex.

6. Elastomer material according to any of claims 1 to 5, wherein the hydrophilic microfibres are made of a synthetic material from the polyamide or polyester family.

7. Elastomer material according to any of claims 1 to 6, wherein the hydrophilic microfibres are made of a cellulosic material such as cotton or linen or from synthetic derivatives such as viscose.

8. Elastomer material according to any of claims 1 to 7, wherein the hydrophilic microfibres have a cross-section with n channels, with n >2.

9. Elastomer material according to claim 8, wherein the cross-section of the hydrophilic microfibres has an oblong shape with grooves or a helical shape.

10. Method for manufacturing an elastomer material wristband, comprising at least one portion made from an elastomer material, the elastomer material comprising at least hydrophilic microfibres, thermally conductive fillers and an antimicrobial additive, **characterised in that** the method comprises the following steps:
- forming a mixture from the elastomer material;
- adding to the mixture obtained in the first step at least hydrophilic microfibres, thermally conductive fillers and an antimicrobial additive;
- forming the wristband from the mixture obtained in the second step by means of a moulding process.

11. Method according to claim 10, **characterised in that** the elastomer material is chosen from thermoplastic elastomers and vulcanisable elastomers.

12. Method for assembling a wristband obtained by the method according to claims 10 and 11, **characterised in that** the method includes the following steps:
- forming a first layer of a wristband intended to be in contact with the skin;
- assembling an aesthetic layer on top of the first layer.

13. Assembly method according to claim 14, wherein the aesthetic layer is leather, fabric, polymer or any other decorative element.
